**Europäisches Patentamt**

**European Patent Office**

**Office européen des brevets**

(19)

(11) Publication number : **0 340 772 B1**

# EUROPEAN PATENT SPECIFICATION

(12)

(45) Date of publication of patent specification :
26.08.92 Bulletin 92/35

(51) Int. Cl.⁵ : **B32B 27/36, B32B 27/20**

(21) Application number : **89108064.0**

(22) Date of filing : **04.05.89**

(54) **Polyester film useful as a support for braille printing.**

(30) Priority : **04.05.88 US 190275**

(43) Date of publication of application :
08.11.89 Bulletin 89/45

(45) Publication of the grant of the patent :
26.08.92 Bulletin 92/35

(84) Designated Contracting States :
**AT BE CH DE ES FR GB GR IT LI LU NL SE**

(56) References cited :
**EP-A- 0 169 959**

(73) Proprietor : **E.I. DU PONT DE NEMOURS AND COMPANY**
**1007 Market Street**
**Wilmington Delaware 19898 (US)**

(72) Inventor : **Morganti, Steven J.**
**1052 Whittier Road**
**Brockport New York 14420 (US)**

(74) Representative : **von Kreisler, Alek,**
**Dipl.-Chem. et al**
**Patentanwälte Von Kreisler-Selting-Werner,**
**Deichmannhaus am Hauptbahnhof**
**W-5000 Köln 1 (DE)**

EP 0 340 772 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

## TECHNICAL FIELD

This invention relates to a process for preparing an element containing reading matter for use by the blind and visually impaired and to an improved element for use by the blind and visually impaired.

## BACKGROUND ART

The use of paper as a support for Braille printing is known. While paper is of lower cost, it tends to wear out during use by the visually impaired since the reading of Braille requires contact between the raised surfaces provided on said paper and the user. Since the printing of Braille is a labor intensive procedure, replacement of those documents and books that have worn out by use becomes costly. It has been proposed to overcome the problems of wear by providing papers having various coatings thereon. Such coatings add cost to the process and generally do not increase the wear-life of the support significantly. The use of polyethylene, vinyl or acetate films as supports for Braille printing and the like is also known. Dots formed in supports used by the prior art tend to fracture and deform during the embossing steps, and thus this undesirable surface causes difficulty to the reader, e.g., discomfort. Additionally, reading speed is reduced with these problems. Synthetic film supports designed to replace the less durable paper have a host of inherent deficiencies themselves. These deficiencies include, or example, cracking, tearing, low tolerance to shifts in temperature, low resistance to chemicals, etc. Thus, the blind or visually impaired user tends not to like this type of film when used as a Braille printing support. Additionally, films that can tear provide little or no advantage over the useful life of paper.

It has been found that the above disadvantages can be overcome and an improved element containing reading matter for the blind and visually impaired obtained which has a dimensionally stable and durable support. An improved process for preparing such element has also been provided.

## SUMMARY OF THE INVENTION

In accordance with this invention there is provided an element having raised Braille characters on at least one surface thereof comprising a dimensionally stable polyester polymeric shaped article.

In accordance with another embodiment of this invention there is provided an element having raised, Braille characters on a surface thereof comprising a dimensionally stable polyethylene terephthalate film support coated on both sides with a resin subbing layer, and coated on one side thereof with a permanent antistatic layer consisting essentially of the reaction product of

(1) a water-soluble, electrically conductive polymer having functionally attached carboxyl groups integral to the polymer, and

(2) a polyfunctional substituted aziridine wherein the hydrogen atom or the atom of the aziridine ring is substituted with an alkyl substituent wherein the alkyl is of 1 to 6 carbon atoms or an aryl substituent of 6 to 10 carbon atoms, the antistatic layer having a coating weight, based on the weight of conductive polymer (1), of between 1 and 4.5 mg/dm$^2$, and on the other side a coating of a thin hardened gelatin layer, on which is coated an outer layer containing a binder, the binder having matte particles dispersed therein.

In accordance with still another embodiment of this invention there is provided a process for providing raised, Braille characters on a support comprising imparting Braille characters on a dimensionally stable polyester article.

## BRIEF DESCRIPTION OF THE DRAWINGS

In the accompanying drawings forming a material part of this disclosure:

FIG. 1 is a cross-section of a preferred film element useful for containing reading matter for use by those who are blind or visually impaired.

FIGS. 2 and 3 are plots showing the effect, on a pair of Braille dots produced on a paper support, of an abrasion wear test. FIG. 2 shows the initial, starting dot quality and FIG. 3 shows the greatly reduced dot characteristic after wear testing.

FIGS. 4 and 5 are plots showing the same tests as in FIGS. 2 and 3 on a pair of Braille dots produced using a preferred polyethylene terephthalate film support of this invention.

## DETAILED DESCRIPTION OF THE INVENTION

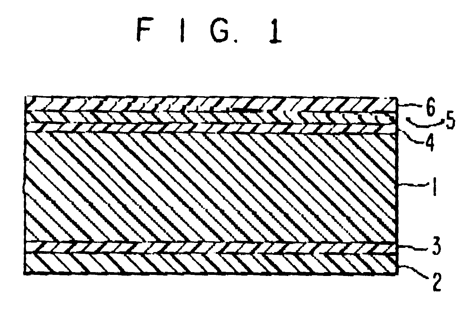

Referring now specifically to the drawings FIG. 1 shows a preferred support for this invention in which 1 is a support of dimensionally stable polyethylene terephthalate film, 2 is an antistatic layer more fully described below applied over a conventional resin sub layer 3. Layer 4 is another conventional resin sub layer over which has been applied a thin, substratum of hardened gelatin 5 and applied thereto is a gelatin layer containing matte particles 6.

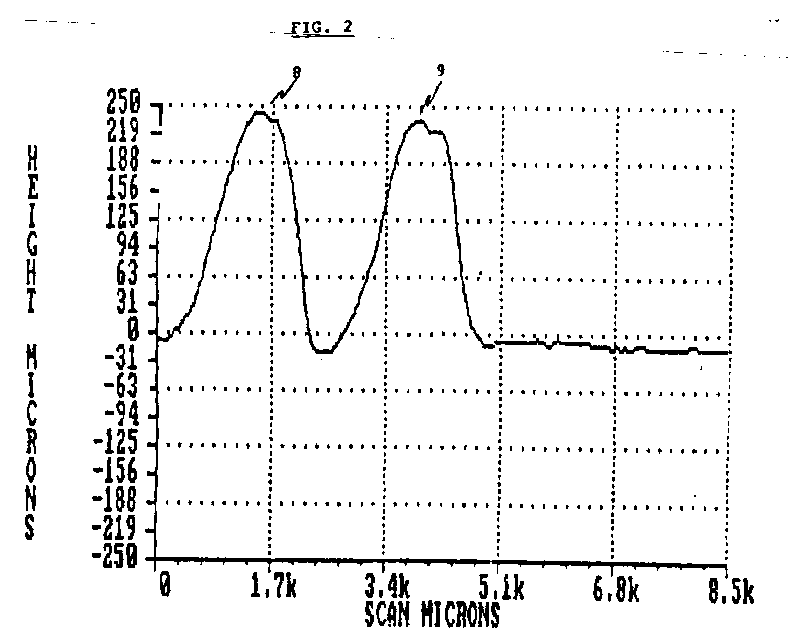

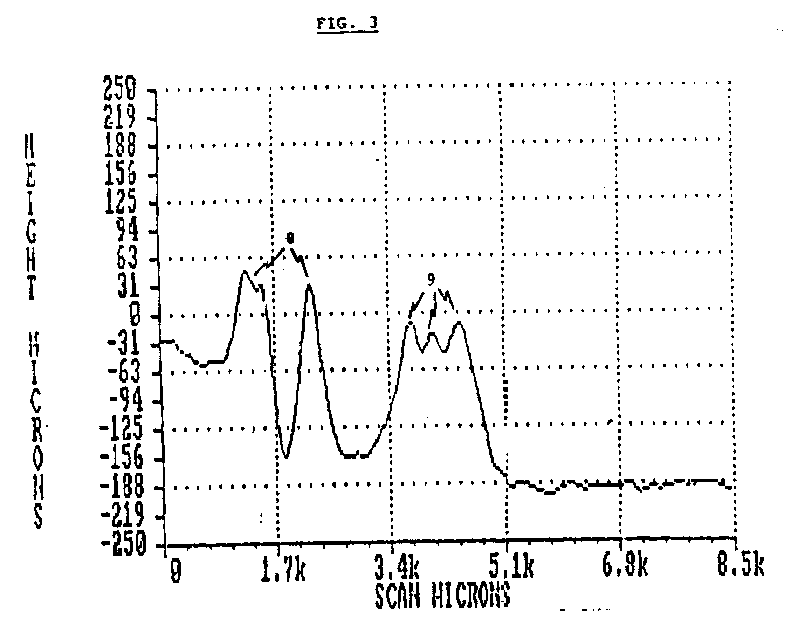

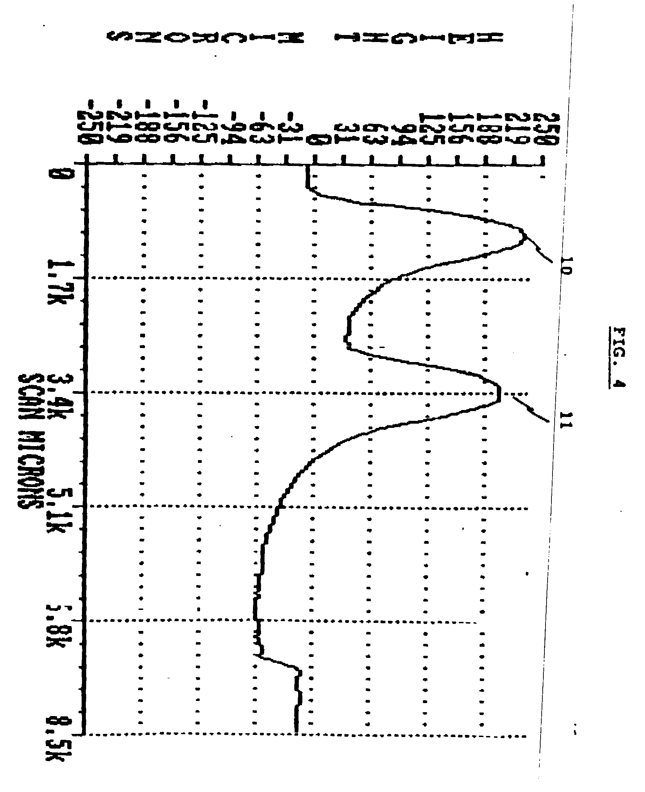

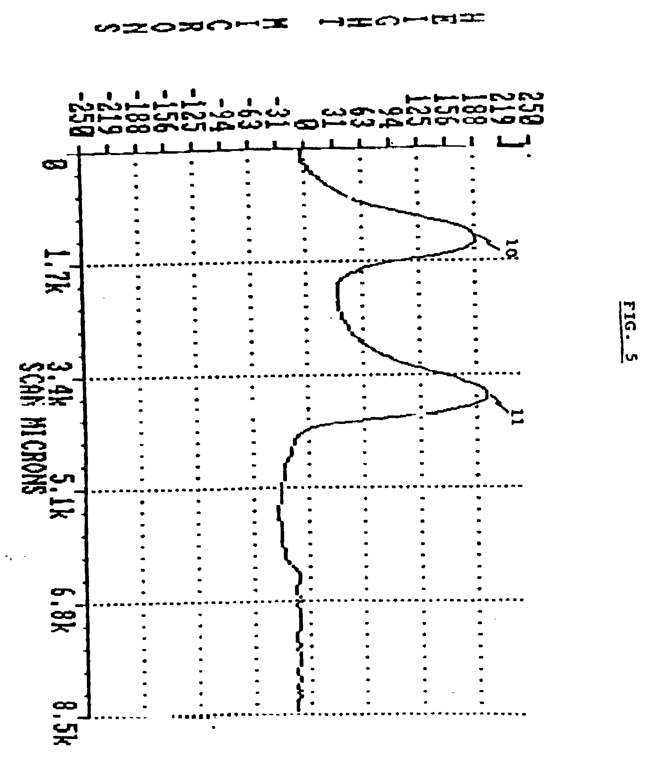

FIGS. 2 and 3 are comparative tests run on a pair of Braille dots made using a conventional, standard Braille paper support. In these figures, and in FIGS. 4 and 5, the pair of dots are scanned with a Sigma-Scan Profilometer, Tencor Instruments Co., Mountain View, CA, Model #80-00100. Then, the surface is abraded by rolling a 1,134 g weight 800 times thereover and the surface measured again using the aforementioned Profilometer. In FIG. 2, the dots, 8 and 9, on the paper support prior to the abrasion wear test are shown with excellent height and symmetry. In FIG. 3, after the wear test, dots 8 and 9 are shown to be ragged and of considerably less height.

For comparative purposes, a pair of dots made using the support illustrated in FIG. 1 were examined under like conditions. In FIG. 4, the dot pair, 10 and 11, are shown prior to the abrasion wear test to have good symmetry and height. After the wear test, as shown in FIG. 5 there is little or no change in either the symmetry or the height of the dots indicating that the surface of the support of this invention survived this test in an excellent manner.

Dimensionally stable polyester, e.g., polyethylene terephthalate film, supports useful within the ambit of this invention (hereinafter termed polyester films or supports) are described by Alles in U.S. Patent No. 2,779,684, the disclosure of which is incorporated herein by reference. These polyester films have a thickness in the range of about 0.002 to 0.005 inch (0.05 to 0.127mm) and preferably 0.0025 to 0.0045 inch (0.063 to 0.114 mm) . It is conventional to apply a resin sub layer on one or both sides of this support as taught by this Alles patent, or by Rawlins U.S. Patent 3,567,452, the disclosure of which is incorporated herein by reference, but a resin sub is not required if no other coatings are to be applied thereon. Thus, during the process of this invention, wherein embossed or Braille printing is applied to a support, polyester films in and of themselves may be used. If it is desired to provide improved support characteristics, various other layers may be applied thereon. For example, in order to improve the quality of elements used in the manufacture of Braille books and magazines wherein multiple pages are used, it may be necessary to apply at least one antistatic treatment to the support. This treatment may be applied in the form of a spray, coating or by other techniques and will thus permit the pages to be easily separated. It is preferred, however, to use a coated more permanent antistatic layer. In this instance, it is particularly preferred to use the antistatic coating of Miller, USSN 07/075.454, filed July 20, 1987, the disclosure of which is incorporated herein by reference. A preferred element having the above-described antistatic layer comprises a polyester support on which is coated at least one permanent antistatic layer consisting essentially of the reaction product of:

(1) a water-soluble, electrically conductive polymer having functionally attached carboxyl groups integral to the polymer, and

(2) a polyfunctional substituted aziridine, wherein the hydrogen atom or atom of the aziridine ring is substituted with an alkyl substituent, wherein the alkyl is of 1 to 6 carbon atoms or an aryl substituent of 6 to 10 carbon atoms, the antistatic layer having a coating weight, based on the weight of conductive polymer (1), of less than 4.5 $mg/dm^2$, preferably 1 to 3 $mg/dm^2$. This antistatic layer, which may be applied to the polyester film support during the manufacture thereof, is usually applied over a conventional resin sub layer. A heat treatment step is applied after these coatings to relieve the strain and tension in the support, comparable to the annealing of glass. All of these steps are conventional and are well known and taught as described in Alles and Miller above. The various components useful in preparing the aforementioned preferred antistatic layer are also well-known and taught in Miller. Alternative antistatic layers or elements known in the prior art which can, however, be used within this invention include but are not limited to: Schadt U.S. Patent 4,225,665 which describes an antistatic layer consisting essentially of a conductive polymer having carboxyl groups, optionally a hydrophic polymer having carboxyl groups and a polyfunctional aziridine crosslinking agent; Miller U.S. Patent 4,301,239 which describes an energy treated film having an aqueous dispersion of a carbon-filled polyacrylate in admixture with a polyfunctional aziridine, the disclosures of which are incorporated herein by reference.

In addition to the antistatic layer, a layer containing matte particles may also be included in the element of the invention. When Braille characters are imprinted onto support, it is conventional that the impinging instrument strike the support from one side, forcing the raised characters, for example, to the other side. In the case of the element shown in FIG. 1, the impinging instrument, e.g., Braille typewriter, would normally strike the support on surface 2 and the raised characters or dots would appear on layer 6. Alternatively, Braille characters may also be impinged from the opposite side. Thus, the user would "feel" the dot characters on layer 6 or opposite side of the element and be able to read these dots. It is, therefor, important that the "feel" of the outermost layer, 6, in this case, be consistent with that of paper, since that is the comparison most blind and visually impaired people make. Thus, it is preferred that a small amount of matte particles be incorporated with layer 6 in order to match this "paper feel". The matte layer can contain 10 to 90% by weight of the matte particles, preferably 20 to 50% by weight. These particles may be small particles of silica, acrylate or polyethylene beads, for example. A typical average particle size is about 1 to 60 μm, preferably 5 to 20 μm for example. The matte particles may be dispersed in any of the well-known binders such as gelatin, polyvinylalcohol, etc. Various known wetting and dispersing agents may also be present in this layer to assist in the dispersion of the particles. The presence of matte layer not only assists in enhancing the "feel" of this layer but also serves as a surface on which writing may be placed. This step assists those who are sighted in helping the visually impaired to learn to use the Braille system for reading, for example. Additionally, whiteners, e.g., $TiO_2$, etc., may also be present in the matte layer. These whiteners may be present in a range of 0.1 to 0.5 g/m², preferably 0.2 to 0.4 g/m². The presence of these whiteners also assists the sighted in assisting the visually handicapped. For example, those who are not blind, but who have some other visual handicap, can use an element of this nature on which the lettering has been placed, to self-teach the Braille system. The lettering can be printed on this type of surface in large, dark characters and Braille imprinted directly below. When the visually handicapped read the lettering, and feel the raised Braille lettering impinged thereon, the learning process can be self-taught. Since many gravely, visually impaired persons become blind at some later date, they can be taught in the Braille reading process prior to becoming totally blind using the element of this invention. In addition to being more durable and resistant to tears and jams within the machinery designed to impart raised, Braille characteristics thereon, the dimensionally stable polyester support of this invention can accept more Braille information than prior art paper supports. Braille information data are known as "cells" and this term refers to the Braille characters themselves. The definitions and specifications for the imprinting of Braille characters on paper is continued in Specification Nos. 800 and 801, issued by the National Library Service for the Blind and Physically Handicapped of the Library of Congress.

EXAMPLES

The following examples illustrate but do not limit the invention wherein the parts and percentages are by weight. Example 2 illustrates a preferred mode wherein the support element contains subbing layers on each side of the support and on one side thereof a permanent antistatic layer as described above and a matte-containing layer of the other side as shown in FIG. 1.

EXAMPLE 1

A sample of uncoated and unsubbed dimensionally stable polyethylene terephthalate film 0.004 inch (0.10 mm) Mylar® film, E. I. du Pont de Nemours and Company, Wilmington, DE was passed through a typical high-speed Braille embossing typewriter and Braille characters were impinged thereon. For control purposes, a sheet of standard Braille paper, e.g., 80 to 100 lbs (36.3 to 45.4 kg), approved for use by the aforementioned Library of Congress Bulletin, was also passed through the same device. Both of these sheets were tested for wear characteristics as follows:

Wear Test:

A single raised Braille dot was isolated on the appropriate support. A 1 Kg, weight was then passed over this dot 40 times. Both samples were then measured for dot quality using the Sigma-Scan Profilometer described above in the specification. The dot produced in the paper had lost more than 50% of its height while that produced in the polyethylene terephthalate support is still full and has a sharp quality.

Abrasion Test:

In this test, a pair of dots were isolated on each support. An abrasion test was performed on each of these pairs using a Gardner Straight Line Washability and Abrasion Machine, Gardner Laboratory, Inc., Bethesda, MD. In this case, the abrasion was carried out for 800 cycles and the dot quality measured again using the above-described Sigma-Scan Profilometer. While the pair of dots in the paper had been reduced to a ragged, unsymmetrical quality, the pair of dots produced in the polyethylene terephthalate support is relatively unaffected.

EXAMPLE 2

A sample of 0.004 inch (0.10 mm) polyethylene terephthalate film containing a mixed polymer of vinylidene chloride/alkyl acrylate/itaconic acid composition of Rawlins U.S. Patent 3,567,452 on both sides, an antistatic layer coated as described in Miller USSN 07/075,454, filed July 20, 1987, on one side and a gelatin layer overcoated with a matte layer of polylethylene beads dispersed in a gelatin binder on the side opposite thereto was prepared. For control purposes, the highest quality paper approved for use in Braille printing as described in Example 1 was used. Both samples were imprinted with Braille characters in a conventional manner and given the tests described in Example 1. The results are shown in FIGS. 2 through 5 and demonstrate thoroughly that Braille characters produced using the polyester support of this invention are superior to those produced using the standard paper support. The dots produced in the polyester support are superior in durability, feel and quality and more Braille information can be printed thereon. For example, in this example, 32 Braille cells were printed on the polyester compared to 28 on paper. In addition, the antistatic layer permitted the easy separation of various and individual sheets of the printed matter while the matte layer assisted in improving the "feel" of the Braille printing and permitted information to be written thereon in a normal manner.

EXAMPLE 3

Example 2 was repeated except that $TiO_2$ is added to the matte containing layer at a loading of 0.3 $g/m^2$. Comparable results are obtained for Braille-image quality and in addition this film has a high opacity white background which permits darkened letters to be printed thereon. These letters are more easily read by the visually impaired.

**Claims**

1. An element having raised Braille characters on at least one surface thereof comprising a dimensionally stable polyester shaped article.

2. An element according to claim 1 wherein the shaped article is in the form of a polyester film.

3. An element according to claim 2 wherein the film is polyethylene terephthalate.

4. An element according to claim 2 having a subbing layer overcoated with an antistatic layer on at least one side thereof.

5. An element according to claim 4 wherein the antistatic layer is a permanent antistatic layer consisting essentially of the reaction product of
    (1) a water-soluble, electrically conductive polymer having functionally attached carboxyl groups integral to the polymer, and
    (2) a polyfunctional substituted aziridine wherein the hydrogen atom or the atom of the aziridine ring is substituted with an alkyl substituent wherein the alkyl is of 1 to 6 carbon atoms or an aryl substituent of 6 to 10 carbon atoms, the antistatic layer having a coating weight, based on the weight of conductive polymer (1), of between 1 and 4.5 $mg/dm^2$.

6. An element according to claim 2 having a subbing layer overcoated with a matte-containing binder layer on at least one side thereof.

7. An element according to claim 6 wherein the matte-containing binder layer also contains a whitener.

8. An element according to claim 7 wherein the whitener is $TiO_2$.

9. An element according to claim 2 wherein one side of the film contains a subbing layer overcoated with an antistatic layer and the other side of the film contains a subbing layer overcoated with a matte-containing binder layer.

10. An element having raised, Braille characters on a surface thereof comprising a dimensionally stable polyethylene terephthalate film support coated on both sides with a resin subbing layer, and coated on one side thereof with a permanent antistatic layer consisting essentially of the reaction product of
    (1) a water-soluble, electrically conductive polymer having functionally attached carboxyl groups integral to the polymer, and
    (2) a polyfunctional substituted aziridine wherein the hydrogen atom or the atom of the aziridine ring is substituted with an alkyl substituent wherein the alkyl is of 1 to 6 carbon atoms or an aryl substituent of 6 to 10 carbon atoms, the antistatic layer having a coating weight, based on the weight of condutive polymer (1), of between 1 and 4.5 $mg/dm^2$, and on the other side a coating of a thin hardened gelatin layer, on which is coated an outer layer containing a binder, the binder having matte particles dispersed therein.

11. A process for providing raised, Braille characteristics on a support comprising imparting raised, Braille characters on a dimensionally stable polyester article.

12. A process according to claim 11 wherein said support is dimensionally stable polyethylene terephthalate film, 0.002 to 0.005 (0.05 to 0.127 mm) inch in thickness.

13. A process for providing raised, Braille characters on a support comprising imparting raised, Braille characters on at least one surface thereof comprising a dimensionally stable polyethylene terephthalate film support coated on both sides with a resin subbing layer, and coated on one side thereof with a permanent antistatic layer consisting essentially of the reaction product of
    (1) a water-soluble, electrically conductive polymer having functionally attached carboxyl groups integral to the polymer, and
    (2) a polyfunctional substituted aziridine wherein the hydrogen atom or the atom of the aziridine ring is substituted with an alkyl substituent wherein the alkyl is of 1 to 6 carbon atoms or an aryl substituent of 6 to 10 carbon atoms, the antistatic layer having a coating weight, based on the weight of conductive polymer (1), of between 1 and 4.5 $mg/dm^2$, and on the other side a coating of a thin hardened gelatin layer, on which is coated an outer layer containing a binder, said binder having matte particles dispersed therein.

**Patentansprüche**

1. Element mit erhöhten Braille-Zeichen auf wenigstens einer Oberfläche desselben, umfassend ein formbeständiges Polyester-Formteil.

2. Element nach Anspruch 1, wobei das Formteil in Form einer Polyester-Folie vorliegt.

3. Element nach Anspruch 1, wobei die Folie Polyethylenterephthalat ist.

4. Element nach Anspruch 2 mit einer unterliegenden Schicht, die mit einer antistatischen Schicht auf wenigstens einer Seite derselben überzogen ist.

5. Element nach Anspruch 4, wobei die antistatische Schicht eine permanente antistatische Schicht ist, bestehend im wesentlichen aus dem Reaktionsprodukt

   (1) eines wasserlöslichen, elektrisch leitenden Polymers mit funktionell verknüpften, im Polymer eingebauten Carboxyl-Gruppen, und
   (2) eines polyfunktionell substituierten Aziridins, worin das Wasserstoff-Atom oder das Atom des Aziridin-Rings substituiert ist mit einem Alkyl-Substituenten, worin das Alkyl 1 bis 6 Kohlenstoff-Atome aufweist, oder einem Aryl-Substituenten mit 6 bis 10 Kohlenstoff-Atomen,
   wobei die antistatische Schicht ein Auftraggewicht von zwischen 1 und 4,5 mg/dm$^2$ aufweist, bezogen auf das Gewicht des leitenden Polymers (1).

6. Element nach Anspruch 2 mit einer unterliegenden Schicht, die mit einer mattierungshaltigen Bindemittelschicht auf wenigstens einer Seite derselben überzogen ist.

7. Element nach Anspruch 6, worin die mattierungshaltige Bindemittelschicht auch ein Weißmittel enthält.

8. Element nach Anspruch 7, worin das Weißmittel TiO$_2$ ist.

9. Element nach Anspruch 2, worin eine Seite der Folie eine unterliegende Schicht enthält, die mit einer antistatischen Schicht überzogen ist, und die andere Seite der Folie eine unterliegende Schicht enthält, die mit einer mattierungshaltigen Bindemittelschicht überzogen ist.

10. Element mit erhöhten Braille-Zeichen auf einer Oberfläche desselben, umfassend einen formbeständigen Träger aus Polyethylenterephthalat-Folie, der auf beiden Seiten mit einer unterliegenden Harzschicht überzogen ist und auf einer Seite desselben mit einer permanenten antistatischen Schicht überzogen ist, bestehend im wesentlichen aus dem Reaktionsprodukt

    (1) eines wasserlöslichen, elektrisch leitenden Polymers mit funktionell verknüpften, im Polymer eingebauten Carboxyl-Gruppen, und
    (2) eines polyfunktionell substituierten Aziridins, worin das Wasserstoff-Atom oder das Atom des Aziridin-Rings substituiert ist mit einem Alkyl-Substituenten, worin das Alkyl 1 bis 6 Kohlenstoff-Atome aufweist, oder einem Aryl-Substituenten mit 6 bis 10 Kohlenstoff-Atomen,
    wobei die antistatische Schicht ein Auftraggewicht von zwischen 1 und 4,5 mg/dm$^2$ aufweist, bezogen auf das Gewicht des leitenden Polymers (1), und auf der anderen Seite mit einem Überzug einer dünnen gehärteten Gelatineschicht, auf welche eine äußere Schicht aufgebracht wird, die ein Bindemittel enthält, wobei das Bindemittel darin dispergierte Mattierungsteilchen aufweist.

11. Verfahren zum Aufbringen von erhöhten Braille-Zeichen auf einem Träger, umfassend das Ausstatten eines formbeständigen Polyester-Teils mit erhöhten Braille-Zeichen.

12. Verfahren nach Anspruch 11, wobei der Träger eine formbeständige Polyethylenterephthalat-Folie mit einer Dicke von 0,002 bis 0,005 inch (0,05 bis 0,127 mm) ist.

13. Verfahren zum Aufbringen von erhöhten Braille-Zeichen auf einem Träger, umfassend das Ausstatten wenigstens einer Oberfläche desselben, umfassend einen formbeständigen Träger aus Polyethylenterephthalat-Folie, der auf beiden Seiten mit einer unterliegenden Harzschicht überzogen ist und auf einer Seite desselben mit einer permanenten antistatischen Schicht überzogen ist, bestehend im wesentlichen aus dem Reaktionsprodukt

    (1) eines wasserlöslichen, elektrisch leitenden Polymers mit funktionell verknüpften, im Polymer eingebauten Carboxyl-Gruppen, und
    (2) eines polyfunktionell substituierten Aziridins, worin das Wasserstoff-Atom oder das Atom des Aziridin-Rings substituiert ist mit einem Alkyl-Substituenten, worin das Alkyl 1 bis 6 Kohlenstoff-Atome aufweist, oder einem Aryl-Substituenten mit 6 bis 10 Kohlenstoff-Atomen,
    wobei die antistatische Schicht ein Auftraggewicht von zwischen 1 und 4,5 mg/dm$^2$ aufweist, bezogen auf das Gewicht des leitenden Polymers (1), und auf der anderen Seite mit einem Überzug einer dünnen gehärteten Gelatineschicht, auf welche eine äußere Schicht aufgebracht wird, die ein Bindemittel enthält, wobei das Bindemittel darin dispergierte Mattierungsteilchen aufweist.

**Revendications**

1.- Un élément ayant des caractères Braille en relief sur au moins l'une de ses surfaces comprenant un article en polyester mis en forme et dimensionnellement stable.

2.- Un élément selon la revendication 1, dans lequel l'article mis en forme est sous la configuration d'un film polyester.

3.- Un élément selon la revendication 2, dans lequel le film est du polyéthylène téréphtalate.

4.- Un élément selon la revendication 2, ayant une sous-couche de revêtement avec une couche antistatique sur au moins une de ses faces.

5.- Un élément selon la revendication 4, dans lequel la couche antistatique est une couche antistatique permanente consistant essentiellement en le produit de la réaction entre:

(1) un polymère soluble dans l'eau, électroconducteur, ayant des groupes fonctionnels carboxyles attachés de manière intégrale au polymère; et
(2) une aziridine polyfonctionnelle substituée dans laquelle l'atome d'hydrogène ou l'atome du cycle aziridine est substitué avec un substituant alkyle contenant de 1 à 6 atomes de carbone ou un substituant aryle contenant de 6 à 10 atomes de carbone, la couche antistatique ayant un poids de revêtement, par rapport au poids du polymère conducteur (1), compris entre 1 et 4,5 mg/dm².

6.- Un élément selon la revendication 2, ayant une sous-couche de revêtement fait d'une couche de liant contenant une matte sur au moins une de ses faces.

7.- Un élément selon la revendication 6, dans lequel la couche de liant contenant la matte contient aussi un agent de blanchiment.

8.- Un élément selon la revendication 7, dans lequel l'agent de blanchiment est du TiO₂.

9.- Un élément selon la revendication 2, dans lequel une face du film contient une sous-couche revêtue d'une couche antistatique et l'autre face du film contient une sous-couche revêtue d'une couche de liant contenant de la matte.

10.- Un élément ayant des caractères Braille en relief sur une de ses faces comprenant un support en film de polyéthylène téréphtalate dimensionnellement stable, revêtu sur ses deux côtés d'une sous-couche de résine et revêtu sur une de ses faces d'une couche antistatique permanente consistant essentiellement en le produit de la réaction entre:

(1) un polymère soluble dans l'eau, électroconducteur, ayant des groupes fonctionnels carboxyles attachés intégralement au polymère; et
(2) une aziridine polyfonctionnelle substituée dans laquelle l'atome d'hydrogène ou l'atome du cycle aziridine est substitué avec un substituant alkyle contenant de 1 à 6 atomes de carbone ou un substituant aryle de 6 à 10 atomes de carbone, la couche antistatique ayant un poids de revêtement, par rapport au poids du polymère conducteur (1), compris entre 1 et 4,5 mg/dm²,
et sur l'autre face un revêtement d'une couche fine de gélatine durcie sur laquelle est revêtue une couche externe contenant un liant, le liant ayant des particules de matte qui y sont dispersées.

11.- Un procédé d'obtention de caractéristiques Braille en relief sur un support comprenant l'embossage de caractères Braille en relief sur un article polyester dimensionnellement stable.

12.- Le procédé selon la revendication 11, dans lequel ledit support est un film polyéthylène téréphtalate dimensionnellement stable d'une épaisseur de 0,02 à 0,005 inch (0,05 à 0,127 mm).

13.- Un procédé d'obtention de caractères Braille en relief sur un support comprenant l'embossage de caractères Braille en relief sur au moins une surface comprenant un support formé d'un film polyéthylène téréphtalate dimensionnellement stable revêtu sur les deux faces avec une couche de résine, et revêtu sur une de ses faces avec une couche antistatique permanente consistant essentiellement en le produit de la réaction entre:

(1) un polymère soluble dans l'eau, électroconducteur, ayant des groupes fonctionnels carboxyles attachés de façon intégrante au polymère; et
(2) une aziridine polyfonctionnelle substituée dans laquelle l'atome d'hydrogène ou l'atome du cycle aziridine est substitué avec un substituant alkyle contenant de 1 à 6 atomes de carbone ou un substituant aryle de 6 à 10 atomes de carbone, la couche antistatique ayant un poids de revêtement, par rapport au poids du polymère conducteur (1), compris entre 1 et 4,5 mg/dm²,
et sur l'autre face un revêtement d'une couche mince de gélatine durcie, sur laquelle est revêtue une couche externe contenant un liant, des particules d'une matte étant dispersée dans ce dernier.

# F I G. 1

FIG. 2

EP 0 340 772 B1

FIG. 3

FIG. 4

EP 0 340 772 B1

FIG. 5